# EUROPEAN PATENT APPLICATION

(11) **EP 4 071 736 A1**
(43) Date of publication of application: **12.10.2022**
(21) Application number: 21908693.1
(22) Date of filing: 24.09.2021
(51) Int. Cl.: G08G 1/01, G06Q 10/04, G06K 9/62, G06Q 10/06

(54) **INTELLIGENT SCHEDULING METHOD AND SYSTEM FOR RAIL TRANSIT**

(30) Priority: 25.12.2020 CN 202011559885
(71) Applicant: Casco Signal Ltd., Shanghai 200070 (CN)
(72) Inventor: HU, Enhua, Shanghai 200070 (CN); LIN, Li, Shanghai 200070 (CN); PEI, Jiafu, Shanghai 200070 (CN); ZHANG, Bingjian, Shanghai 200070 (CN); FAN, Dongming, Shanghai 200070 (CN); GUO, Jiafeng, Shanghai 200070 (CN); YANG, Shuanglei, Shanghai 200070 (CN)
(74) Representative: Sanger, Phillip Simon
(86) International application number: PCT/CN2021/120054
(87) International publication number: WO 2022/134692

(57) **Abstract**

The present invention discloses an intelligent dispatching method and system for rail transit. The method includes: collecting original data of a preset range from a plurality of data sources; acquiring passenger flow data of a rail transit station according to the original data; building a passenger flow prediction model of the rail transit station according to the passenger flow data of the rail transit station; acquiring a passenger flow volume of the rail transit station in a preset period according to the passenger flow prediction model; and performing coordinated dispatching on vehicles and passengers of the rail transit station according to the passenger flow volume of the preset period, so as to make a smooth passenger flow at the rail transit station. In the present invention, the original data is acquired through the plurality of data sources, thus acquiring the passenger flow data, which achieves all-round monitoring of a passenger flow at the rail transit station; different early warnings can be issued, so as to reasonably perform coordinated dispatching on vehicles and passengers at the rail transit station, thereby orderly coping with an upcoming large passenger flow and ensuring a smooth passenger flow at the rail transit station.

## Description

### Technical Field

The present invention relates to the intelligent technical field of urban rail transit, in particular to an intelligent dispatching method and system for rail transit.

### Background Art

As one of the important components of an urban rail transit system, an urban rail transit station is not only a place for passengers to get-on-and-off and transfer, but also a place for vehicles to arrive, depart, turn back and temporarily park. It can be said that the normal operation of the urban rail transit station is an important guarantee for the smooth flow of the urban rail transit. The normal operation of the urban rail transit station is ensured by the normal operation of equipment in the station and the orderly circulation of a passenger flow.

At present, a corresponding automatic system (such as a comprehensive monitoring system) has been built to monitor operation statuses of the equipment in the rail transit station to ensure the normal operation of the equipment. For the passenger flow in the rail transit station, it mainly relies on staff for manual management. However, due to the limited staff, it is impossible to accurately predict the passenger flow of the rail transit station and timely dispatch vehicles, large-scale multi-line transfer stations and rail transit stations with railway stations or airports nearby often have problems of hoarding passengers in the station due to a large passenger flow, which brings potential safety risk to the normal operation of the rail transit stations, also increases the work intensity and difficulty of the staff, and reduces the travel efficiency of the urban rail transit.

### Summary of the Invention

The present invention aims to provide an intelligent scheduling method and system for rail transit, which can accurately predict a passenger flow of a rail transit station according to a plurality of data sources and perform coordinated dispatching on vehicles and passengers, so as to make a smooth passenger flow at the rail transit station.

In order to achieve the foregoing objective, the present invention is implemented by the following technical solution:
An intelligent dispatching method for rail transit includes:
collecting original data of a preset range from a plurality of data sources;
acquiring passenger flow data of a rail transit station according to the original data;
building a passenger flow prediction model of the rail transit station according to the passenger flow data of the rail transit station;
acquiring a passenger flow volume of the rail transit station in a preset period according to the passenger flow prediction model; and
performing coordinated dispatching on vehicles and passengers of the rail transit station according to the passenger flow volume of the preset period, so as to make a smooth passenger flow at the rail transit station.

Preferably, the preset range includes: the rail transit station and a circular radiation area taking the rail transit station as a center and having a radius of 300 m to 2500 m;
the original data includes: sold and checked ticket data, station video data, mobile phone signaling data, vehicle-mounted video data, and vehicle weight data.

Preferably, the step of acquiring passenger flow data of a rail transit station according to the original data includes:
acquiring historical gate passenger flow data and real-time gate passenger flow data of the rail transit station according to the sold and checked ticket data;
acquiring historical entry and exit passenger flow data and real-time entry and exit passenger flow data of the rail transit station according to the station video data and the mobile phone signaling data; and
acquiring, according to the vehicle-mounted video data and the vehicle weight data, historical vehicle-mounted passenger flow data and real-time vehicle-mounted passenger flow data of a vehicle waiting for arrival.

Preferably, before the step of building a passenger flow prediction model of the rail transit station according to the passenger flow data of the rail transit station, the method further includes:
preprocessing the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data, the preprocessing including deduplication and verification.

Preferably, the step of building a passenger flow prediction model of the rail transit station according to the passenger flow data of the rail transit station includes:
according to the preprocessed historical gate passenger flow data, the preprocessed historical entry and exit passenger flow data, and the preprocessed historical vehicle-mounted passenger flow data, using a preset method to build the passenger flow prediction model of the rail transit station;
the preset method includes one or any combination of a sliding window averaging method, T-SNE pattern analysis, DBSCAN pattern clustering and a random forest algorithm.

Preferably, the step of acquiring a passenger flow volume of the rail transit station in a preset period according to the passenger flow prediction model includes:
acquiring an inbound and outbound passenger flow of the rail transit station in the preset period through the passenger flow prediction model according to the preprocessed real-time gate passenger flow data, the preprocessed real-time entry and exit passenger flow data, and the preprocessed real-time vehicle-mounted passenger flow data.

Preferably, the step of performing coordinated dispatching on vehicles and passengers of the rail transit station according to the passenger flow volume of the preset period includes:
acquiring a passenger retention amount of the rail transit station in the preset period according to the inbound and outbound passenger flow in the preset period;
acquiring the number of vehicles waiting for arrival at the rail transit station in the preset period through a rail transit vehicle operation map;
calculating the transport capacity of the vehicles waiting for arrival in the preset period according to the number of the vehicles waiting for arrival and the real-time vehicle-mounted passenger flow data; and
calculating, according to the passenger retention amount and the transport capacity of the vehicles waiting for arrival in the preset period, a transport capacity matching coefficient of the vehicles waiting for arrival, so as to perform coordinated dispatching on the vehicles waiting for arrival and stranded passenger in the rail transit station.

Preferably, the step of performing coordinated dispatching on vehicles and passengers of the rail transit station according to the passenger flow volume of the preset period further includes:
if the transport capacity matching coefficient is greater than 0.8, issuing a yellow warning to the rail transit station, and dredging the stranded passengers;
if the transport capacity matching coefficient is greater than 1, issuing an orange warning to the rail transit station, and restricting the flow in the rail transit station; and
if the transport capacity matching coefficient is greater than 1.2, issuing a red warning to the rail transit station, increasing the number of vehicles waiting for arrival, and adjusting a running interval of the vehicles waiting for arrival.

In another aspect, the present invention further provides an intelligent dispatching system for rail transit, including:
a data collection module configured for collecting original data of a preset range from a plurality of data sources;
a data analysis module configured for acquiring passenger flow data of a rail transit station according to the original data;
a model building module configured for building a passenger flow prediction model of the rail transit station according to the passenger flow data of the rail transit station, and acquiring, according to the passenger flow prediction model, a passenger flow volume of the rail transit station in a preset period; and
a commanding and dispatching module configured for performing coordinated dispatching on vehicles and passengers of the rail transit station according to the passenger flow volume of the preset period.

Preferably, the intelligent dispatching system for rail transit further includes:
a data preprocessing module configured for preprocessing the original data;
a thermodynamic chart module configured for generating a passenger flow thermodynamic chart according to the passenger flow data of the rail transit station.

Preferably, the preset range includes: the rail transit station and a circular radiation area taking the rail transit station as a center and having a radius of 300 m to 2500 m;
the original data includes: sold and checked ticket data, station video data, mobile phone signaling data, vehicle-mounted video data, and vehicle weight data.

Preferably, the data analysis module is specifically configured for acquiring historical gate passenger flow data and real-time gate passenger flow data of the rail transit station according to the sold and checked ticket data;
acquiring historical entry and exit passenger flow data and real-time entry and exit passenger flow data of the rail transit station according to the station video data and the mobile phone signaling data; and
acquiring, according to the vehicle-mounted video data and the vehicle weight data, historical vehicle-mounted passenger flow data and real-time vehicle-mounted passenger flow data of a vehicle waiting for arrival.

Preferably, the data preprocessing module is specifically configured for preprocessing the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data, the preprocessing including deduplication and verification.

Preferably, the model building module is specifically configured for using, according to the preprocessed historical gate passenger flow data, the preprocessed historical entry and exit passenger flow data, and the preprocessed historical vehicle-mounted passenger flow data, a preset method to build the passenger flow prediction model of the rail transit station; and
acquiring an inbound and outbound passenger flow of the rail transit station in the preset period through the passenger flow prediction model according to the preprocessed real-time gate passenger flow data, the preprocessed real-time entry and exit passenger flow data, and the preprocessed real-time vehicle-mounted passenger flow data.

Preferably, the preset method includes one or any combination of a sliding window averaging method, T-SNE pattern analysis, DBSCAN pattern clustering and a random forest algorithm.

Preferably, the commanding and dispatching module is specifically configured for acquiring a passenger retention amount of the rail transit station in the preset period according to the inbound and outbound passenger flow in the preset period;
acquiring the number of vehicles waiting for arrival at the rail transit station in the preset period through a rail transit vehicle operation map;
calculating the transport capacity of the vehicles waiting for arrival in the preset period according to the number of the vehicles waiting for arrival and the real-time vehicle-mounted passenger flow data; and
calculating, according to the passenger retention amount and the transport capacity of the vehicles waiting for arrival in the preset period, a transport capacity matching coefficient of the vehicles waiting for arrival, so as to perform coordinated dispatching on the vehicles waiting for arrival and stranded passenger in the rail transit station.

Preferably, if the transport capacity matching coefficient is greater than 0.8, a yellow warning is issued to the rail transit station, and the stranded passengers are dredged;
if the transport capacity matching coefficient is greater than 1, an orange warning is issued to the rail transit station, and the flow in the rail transit station is restricted; and
if the transport capacity matching coefficient is greater than 1.2, a red warning is issued to the rail transit station; the number of vehicles waiting for arrival is increased; and a running interval of the vehicles waiting for arrival is adjusted.

The present invention has one of the following advantages.

The intelligent scheduling method and system for rail transit provided by the present invention can collect the original data in the preset range from the plurality of data sources, and acquire, according to the original data, the passenger flow data of the rail transit station, thereby achieving all-round monitoring of the passenger flow at the rail transit station. The real-time monitoring can not only overcome the shortcoming that the means for acquiring the passenger flow data of the rail transit station in the existing technology is single, but also provide a rich data support for the building of the passenger flow prediction model.

The present invention can perform preprocessing such as information conversion, data deduplication (including data duplication checking, cleaning, screening, etc.) and verification on the passenger flow data of the rail transit station obtained according to the original data collected from the plurality of data sources, so that the accuracy of the acquired passenger flow data of the rail transit station is high.

In the present invention, the passenger retention amount at the rail transit station acquired from the inbound and outbound passenger flow in the preset period is combined with the transport capacity, obtained according to the number of the vehicles waiting for arrival and the real-time vehicle-mounted passenger flow data, of the vehicles waiting for arrival in the preset period, thus obtaining the transport capacity matching coefficient of the vehicles waiting for arrival and realizing dynamic correlation between the inbound and outbound passenger flow of the rail transit station and the transport capacity of the vehicles waiting for arrival.

The present invention can also issue different early warnings to the rail transit station according to the transport capacity matching coefficient of the vehicles waiting for arrival, so that station staff can take different measures to reasonably perform coordinated dispatching on the vehicles and passengers at the rail transit station, thereby orderly coping with an upcoming large passenger flow and ensuring a smooth passenger flow at the rail transit station.

The present invention can also be linked with a ground transportation system to guide, according to the ground transportation information, passengers to take ground transportation or other nearby subway lines, so as to form regional dispatching management, thereby ensuring the smooth passenger flow at the rail transit station.

### Brief Description of the Drawings

FIG. 1 is a flow chart of an intelligent dispatching method for rail transit provided by one embodiment of the present invention;
FIG. 2 is a logic diagram for coordinated dispatching for vehicles and passengers by an intelligent dispatching method for rail transit provided by one embodiment of the present invention;
FIG. 3 is schematic structural diagram of an intelligent dispatching system for rail transit provided by one embodiment of the present invention.

### Detailed Description of the Invention

An intelligent dispatching method and system for rail transit provided by the present invention are further described in detail below in combination with the accompanying drawings and specific implementation modes. According to the following description, the advantages and features of the present invention will be clearer. It should be noted that the drawings are in a very simplified form and all use imprecise proportions, which are only used to conveniently and clearly assist in explaining the purposes of the implementation modes of the present invention. For the purpose, features and advantages of the present invention to be more clearly understood, the accompanying drawings are referred to. It should be noted that the structures, proportions, sizes, etc. shown in the drawings in this specification are only used to cooperate with the contents disclosed in the specification, so as to be understood and read by those who are familiar with the technology, and are not used to limit the implementation of the present invention. Therefore, it does not have technical substantive significance. Any modification of structure, change of proportional relationship or adjustment of size should still fall within the scope of the present invention that can be covered by the technical content disclosed by the present invention without affecting the effect that the present invention can achieve and the purpose that can be achieved.

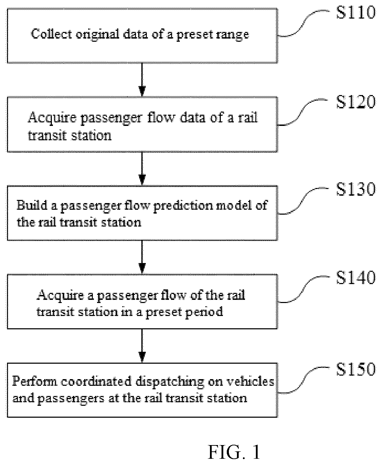

Referring to FIGS. 1-2, this embodiment provides an intelligent dispatching method for rail transit, including the following. At step S110, original data of a preset range is collected from a plurality of data sources. At step S120, passenger flow data of a rail transit station is acquired according to the original data. At step S130, a passenger flow prediction model of the rail transit station is built according to the passenger flow data of the rail transit station. At step S140, a passenger flow volume of the rail transit station in a preset period is acquired according to the passenger flow prediction model. At step S150, coordinated dispatching is performed on vehicles and passengers of the rail transit station according to the passenger flow volume of the preset period, so as to make a smooth passenger flow at the rail transit station.

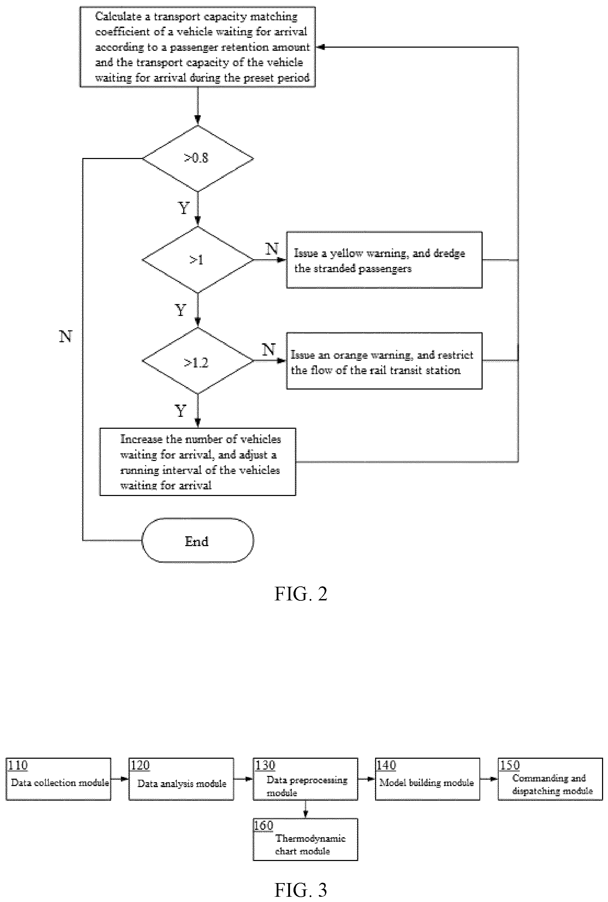

Referring to FIG. 1 and FIG. 2 at the same time, the preset range includes: the rail transit station and a circular radiation area taking the rail transit station as a center and having a radius of 300 m to 2500 m; the original data includes: sold and checked ticket data, station video data, mobile phone signaling data, vehicle-mounted video data, and vehicle weight data.

It can be understood that in some other embodiments, the step S120 includes the following. Historical gate passenger flow data and real-time gate passenger flow data of the rail transit station are acquired according to the sold and checked ticket data; historical entry and exit passenger flow data and real-time entry and exit passenger flow data of the rail transit station are acquired according to the station video data and the mobile phone signaling data; and historical vehicle-mounted passenger flow data and real-time vehicle-mounted passenger flow data of a vehicle waiting for arrival are acquired according to the vehicle-mounted video data and the vehicle weight data.

Specifically, in this embodiment, for a rail transit station having multiple transfer transport lines and a rail transit station with a railway station, an airport, a scenic spot, a large exhibition hall or a shopping mall and other places nearby, it is very easy to cause a problem of stranded passengers or hoarding of passengers at the rail transit stations due to an extremely large passenger flow. Therefore, it is not only necessary to collect the original data from the rail transit station, but also to collect the original data from a surrounding area of the rail transit station, so that the passenger flow data of the rail transit station acquired according to the original data is more accurate, thus ensuring a smooth passenger flow at the rail transit station. Preferably, the surrounding area of the rail transit station can be a circular radiation area taking the rail transit station as a center and having a radius of 2000 meters, but the present invention is not limited to this.

Specifically, the preset range, that is, the original data of the rail transit station and the circular radiation area may be acquired from the plurality of data sources. Preferably, the original data, i.e., the sold and checked ticket data, the station video data, the off-station video data, the mobile phone signaling data, the vehicle-mounted video data and the vehicle weight data, of the rail transit station can be obtained through a fare collection system of the rail transit station, a station video system in the preset range (including a platform, a station hall, a surrounding area outside the station, and the like), an off-station video system, a mobile phone signaling system of a mobile operator, and a vehicle-mounted system of the vehicle waiting for arrival. By using the original data collected from the plurality of data sources, the passenger flow data of the rail transit station can be acquired, thereby achieving all-round monitoring of the passenger flow at the rail transit station. The real-time monitoring can not only overcome the shortcoming that the means for acquiring the passenger flow data of the rail transit station in the existing technology is single, but also provide a rich data support for the building of the passenger flow prediction model. However, the present invention is not limited to this.

In this embodiment, the historical gate passenger flow data and the real-time gate passenger flow data of the rail transit station can be acquired through the sold and checked ticket data. The real-time gate passenger flow data may include stage (such as 5 min) gate passenger flow data and section passenger flow data. The historical entry and exit passenger flow data and the real-time entry and exit passenger flow data of the rail transit station can be obtained through the station video data, the off-station video data and the mobile phone signaling data in the preset range (including the platform, the station hall, the surrounding area outside the station and the like) in conjunction with passenger flow direction analysis. The historical vehicle-mounted passenger flow data and the real-time vehicle-mounted passenger flow data of the vehicles waiting for arrival (such as two shifts going to arrive at the station) in the rail transit station can be acquired through the vehicle-mounted video data and the vehicle weight data.

Continuing to refer to FIG. 1, before the step S130, the method further includes the following. The historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data are preprocessed, the preprocessing including deduplication and verification.

Specifically, in this embodiment, the passenger flow data of the rail transit station obtained after the original data collected from the plurality of data sources is analyzed in terms of passenger flow density, passenger flow direction, passenger flow velocity, and abnormal passenger behaviors have the problem of data duplication. Therefore, the acquired passenger flow data of the rail transit station can be preprocessed by information conversion, data deduplication (including data duplication checking, cleaning, screening, etc.), so that the accuracy of the passenger flow data of the rail transit station is higher, but the present invention is not limited to this.

Continuing to refer to FIG. 1, the step S130 includes the following. According to the preprocessed historical gate passenger flow data, the preprocessed historical entry and exit passenger flow data, and the preprocessed historical vehicle-mounted passenger flow data, a preset method is used to build the passenger flow prediction model of the rail transit station; the preset method includes one or any combination of a sliding window averaging method, T-SNE pattern analysis, DBSCAN pattern clustering and a random forest algorithm.

Specifically, in this embodiment, the preprocessed historical gate passenger flow data, the preprocessed historical entry and exit passenger flow data, and the preprocessed historical vehicle-mounted passenger flow data can be used as training data; the passenger flow prediction model of the rail transit station is built by means of combining the DBSCAN pattern clustering method, the random forest algorithm, and the sliding window averaging method and predicts an inbound and outbound passenger flow of the rail transit station in a certain historical time period, so as to obtain an inbound and outbound passenger flow prediction value of the rail transit station in the certain historical time period. The inbound and outbound passenger flow of the rail transit station includes a passenger flow entering and leaving a station port of the rail transit station and a get-on-and-off passenger flow for transferring in the rail transit station. At the same time, an actual passenger flow value of the rail transit station corresponding to the above historical time period can also be acquired from an urban rail transit statistical system and is subjected to comparative analysis with a passenger flow prediction value of the rail transit station in the above historical period, so as to optimize the passenger flow prediction model so that the prediction accuracy of the passenger flow prediction model meets the requirements. For example, according to the preprocessed historical gate passenger flow data, the preprocessed historical entry and exit passenger flow data and the preprocessed historical vehicle-mounted passenger flow in the morning (06:00-12:00) of a day at the rail transit station, after an inbound and outbound passenger flow on the afternoon (12:00-18:00) of the day is predicted, the predicted inbound and outbound passenger flow is compared with an actual inbound and outbound passenger flow value on the afternoon (12: 00-18: 00) of the day, so as to optimize the passenger flow prediction model. After a get-on-and-off passenger flow of a vehicle in a certain shift at the rail transit station is predicted according to the preprocessed real-time vehicle-mounted passenger flow data of the vehicle in this shift, the predicted get-on-and-off passenger flow is compared with an actual get-on-and-off passenger flow value of the vehicle in this shift at the rail transit station, so as to optimize the passenger flow prediction model. Preferably, when the passenger flow prediction model of the rail transit station is built, external influence factors can also be superimposed, such as dates (working days, weekends and holidays), weather, schedules, various activities outside the station, equipment conditions, and other emergencies, so as to improve the prediction accuracy of the passenger flow prediction model, but the present invention is not limited to this.

Continuing to refer to FIG. 1, the step S140 includes the following. According to the preprocessed real-time gate passenger flow data, the preprocessed real-time entry and exit passenger flow data, and the preprocessed real-time vehicle-mounted passenger flow data, an inbound and outbound passenger flow of the rail transit station in the preset period is acquired through the passenger flow prediction model.

Specifically, in this embodiment, the preset time period may be a certain future time period relative to real-time, or may be the whole day including real-time; for example, real-time is 14:00 on that day; the preset time period may be 17:00 on that day and can also be the whole day of that day. More specifically, according to the preprocessed real-time gate passenger flow data, the preprocessed real-time entry and exit passenger flow data, and the preprocessed real-time vehicle-mounted passenger flow data, the passenger flow prediction model can predict an inbound passenger flow, an outbound passenger flow and a section passenger flow in a certain future time period, predict morning and evening peak values, and predict an inbound passenger flow, an outbound passenger flow and a section passenger flow of the whole day, but the present invention is not limited to this.

Referring to FIG. 1 and FIG. 2 at the same time, the step S150 includes the following. A passenger retention amount of the rail transit station in the preset period is acquired according to the inbound and outbound passenger flow in the preset period; the number of vehicles waiting for arrival at the rail transit station in the preset period is acquired through a rail transit vehicle operation map; the transport capacity of the vehicles waiting for arrival in the preset period is calculated according to the number of the vehicles waiting for arrival and the real-time vehicle-mounted passenger flow data; and a transport capacity matching coefficient of the vehicles waiting for arrival is calculated according to the passenger retention amount and the transport capacity of the vehicles waiting for arrival in the preset period, so as to perform coordinated dispatching on the vehicles waiting for arrival and stranded passenger in the rail transit station.

It can be understood that, in some other embodiments, the step S150 further includes the following. If the transport capacity matching coefficient is greater than 0.8, a yellow warning is issued to the rail transit station, and the stranded passengers are dredged; if the transport capacity matching coefficient is greater than 1, an orange warning is issued to the rail transit station, and the flow in the rail transit station is restricted; and if the transport capacity matching coefficient is greater than 1.2, a red warning is issued to the rail transit station; the number of vehicles waiting for arrival is increased; a running interval of the vehicles waiting for arrival is adjusted.

Specifically, a rail transit vehicle operation map may be received from a rail transit signal system, so as to obtain arrival and departure time information of the vehicles waiting for arrival at the rail transit station, thus acquiring the number of the vehicles waiting for arrival at the rail transit station in the preset period. Therefore, the number of the vehicles waiting for arrival and the real-time vehicle-mounted passenger flow data of the vehicles waiting for arrival are combined for analysis to obtain the transport capacity of the vehicles waiting for arrival in the preset period. A ratio of the passenger retention amount in the preset period to the transport capacity of the vehicles waiting for arrival is the transport capacity matching coefficient of the vehicles waiting for arrival. According to the sizes of the transport capacity matching coefficients of the vehicle waiting for arrival, different early warnings can be issued to the rail transit station, so that the station staff can take different measures to perform reasonable coordinated dispatching on the vehicles and passengers at the rail transit station to deal with the upcoming large passenger flow, but the present invention is not limited to this.

In this embodiment, if the transport capacity matching coefficient is not greater than 0.8, no dispatching measure is taken; when the transport capacity matching coefficient is greater than 0.8 and less than 1, a yellow warning is issued to the rail transit station, and the stranded passengers are dredged; when the transport capacity matching coefficient is greater than 1 and less than 1.2, an orange warning is issued to the rail transit station, and the flow in the rail transit station is restricted; and when the transport capacity matching coefficient is greater than 1.2, a red warning is issued to the rail transit station; the number of vehicles waiting for arrival is increased; a running interval of the vehicles waiting for arrival is adjusted; at the same time, the flow in the rail transit station is restricted, and the stranded passengers are dredged. The rail transit station can also be linked with a ground transportation system to guide, according to the ground transportation information, passengers to take ground transportation or other nearby subway lines, so as to form regional dispatching management, thereby ensuring the smooth passenger flow at the rail transit station.

Based on the same inventive concept, in combination with FIG. 3, this embodiment further provides an intelligent dispatching system for rail transit, including: a data collection module 110 configured for collecting original data of a preset range from a plurality of data sources; a data analysis module 120 configured for acquiring passenger flow data of a rail transit station according to the original data; a model building module 140 configured for building a passenger flow prediction model of the rail transit station according to the passenger flow data of the rail transit station, and acquiring, according to the passenger flow prediction model, a passenger flow volume of the rail transit station in a preset period; and a commanding and dispatching module 150 configured for performing coordinated dispatching on vehicles and passengers of the rail transit station according to the passenger flow volume of the preset time period.

It can be understood that in some other embodiments, the intelligent dispatching system for rail transit further includes a data preprocessing module 130 configured for preprocessing the original data; and a thermodynamic chart module 160 configured for generating a passenger flow thermodynamic chart according to the passenger flow data of the rail transit station.

In some embodiments, the preset range includes: the rail transit station and a circular radiation area taking the rail transit station as a center and having a radius of 300 m to 2500 m; the original data includes: sold and checked ticket data, station video data, mobile phone signaling data, vehicle-mounted video data, and vehicle weight data.

Specifically, in this embodiment, the data collection module 110 can be respectively connected to a fare collection system of the rail transit station, a station video system in the preset range (including a platform, a station hall, a surrounding area outside the station, etc.), an off-site video system, a mobile phone signaling system of a mobile operator, and a vehicle-mounted system of a vehicle waiting for arrival, so as to acquire and store the original data in the preset range. The data collection module 110 can also be separately connected to a rail transit signal system and a ground transportation system, so as to obtain the rail transit vehicle operation map and the ground transportation information of the rail transit station. Preferably, the data collection module 110 is connected to the fare collection system, the station video system, the off-station video system, the mobile phone signaling system of the mobile operator, and the vehicle-mounted system of the vehicle waiting for arrival; network security protection equipment can be arranged between the rail transit signal system and the ground transportation system, so as to ensure the security of data transmission. The data collection module 110 may be a data collection server, but the present invention is not limited to this.

Continuing to refer to FIG. 3, the data analysis module 120 is specifically configured for acquiring historical gate passenger flow data and real-time gate passenger flow data of the rail transit station according to the sold and checked ticket data; acquiring historical entry and exit passenger flow data and real-time entry and exit passenger flow data of the rail transit station according to the station video data and the mobile phone signaling data; and acquiring historical vehicle-mounted passenger flow data and real-time vehicle-mounted passenger flow data of a vehicle waiting for arrival according to the vehicle-mounted video data and the vehicle weight data.

Specifically, in this embodiment, the data analysis module 120 can acquire the passenger flow data, i.e., the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data, of the rail transit station after analyzing passenger flow density, passenger flow direction, passenger flow velocity, abnormal behaviors of passengers. The data analysis module 120 may be a data analysis server, but the present invention is not limited to this.

Continuing to refer to FIG. 3, the data preprocessing module 130 is specifically configured for preprocessing the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data, the preprocessing including deduplication and verification.

Specifically, in this embodiment, the passenger flow data (including the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data) of the rail transit station obtained by the data analysis module 120 have the problem of data duplication. Therefore, the data preprocessing module 130 performs information conversion, data deduplication (including data duplication checking, cleaning, screening, etc.) and data checking, i.e., verification, on the obtained passenger flow data of the rail transit station, so that the accuracy of the acquired passenger flow data of the rail transit station is higher. The data preprocessing module 130 may be a data preprocessing server, but the present invention is not limited to this.

Specifically, in this embodiment, the thermodynamic chart module 160 may generate a passenger flow thermodynamic chart according to the preprocessed passenger flow data of the rail transit station, so as to visually display a specific distribution of the passenger flow, but the present invention is not limited to this.

Continuing to refer to FIG. 3, the model building module 140 is specifically configured for using, according to the preprocessed historical gate passenger flow data, the preprocessed historical entry and exit passenger flow data, and the preprocessed historical vehicle-mounted passenger flow data, a preset method to build the passenger flow prediction model of the rail transit station; and acquiring an inbound and outbound passenger flow of the rail transit station in the preset period through the passenger flow prediction model according to the preprocessed real-time gate passenger flow data, the preprocessed real-time entry and exit passenger flow data, and the preprocessed real-time vehicle-mounted passenger flow data.

It can be understood that in some other embodiments, the preset method includes one or any combination of a sliding window averaging method, T-SNE pattern analysis, DBSCAN pattern clustering and a random forest algorithm.

Specifically, in this embodiment, the model building module 140 builds the passenger flow prediction model by combining the DBSCAN pattern clustering method, the random forest algorithm and the sliding window averaging method, so as to improve the prediction accuracy of the passenger flow prediction model, but the present invention is not limited to this.

Continuing to refer to FIG. 3, the commanding and dispatching module 150 is specifically configured for acquiring a passenger retention amount of the rail transit station in the preset period according to the inbound and outbound passenger flow in the preset period; acquiring the number of vehicles waiting for arrival at the rail transit station in the preset period through a rail transit vehicle operation map; calculating the transport capacity of the vehicles waiting for arrival in the preset period according to the number of the vehicles waiting for arrival and the real-time vehicle-mounted passenger flow data; and calculating, according to the passenger retention amount and the transport capacity of the vehicles waiting for arrival in the preset period, a transport capacity matching coefficient of the vehicles waiting for arrival, so as to perform coordinated dispatching on the vehicles waiting for arrival and stranded passenger in the rail transit station.

It can be understood that, in some other embodiments, if the transport capacity matching coefficient is greater than 0.8, a yellow warning is issued to the rail transit station, and the stranded passengers are dredged; if the transport capacity matching coefficient is greater than 1, an orange warning is issued to the rail transit station, and the flow in the rail transit station is restricted; and if the transport capacity matching coefficient is greater than 1.2, a red warning is issued to the rail transit station; the number of vehicles waiting for arrival is increased; a running interval of the vehicles waiting for arrival is adjusted.

Specifically, the commanding and dispatching module 150 may provide a regional commanding center dispatching human-machine interface of the rail transit station, so that reasonable and timely coordinated dispatching is performed on the vehicles and passengers at the rail transit station according to the transport capacity matching coefficients of the vehicles waiting for arrival and the ground transportation information, thus ensuring a smooth passenger flow at the rail transit station. The commanding and dispatching module 150 may be a commanding and dispatching workstation, but the present invention is not limited to this.

In this embodiment, if the transport capacity matching coefficient calculated by the commanding and dispatching module 150 is not greater than 0.8, the commanding and dispatching module 150 does not take any dispatching measure; when the transport capacity matching coefficient is greater than 0.8 and less than 1, the commanding and dispatching module 150 issues a yellow warning to the rail transit station and informs station staff to dredge the stranded passengers; when the transport capacity matching coefficient is greater than 1 and less than 1.2, the commanding and dispatching module 150 issues an orange warning to the rail transit station and informs the station staff to restrict the flow in the rail transit station and dredge the stranded passengers; and when the transport capacity matching coefficient is greater than 1.2, the commanding and dispatching module 150 issues a red warning to the rail transit station and informs the station staff to increase the number of vehicles waiting for arrival, adjust a running interval of the vehicles waiting for arrival, restrict the flow in the rail transit station and dredge the stranded passengers. The commanding and dispatching module 150 can also be linked with a ground transportation system to guide, according to the ground transportation information, passengers to take ground transportation or other nearby subway lines, so as to form regional dispatching management, thereby ensuring the smooth passenger flow at the rail transit station.

According to the above, this embodiment provides an intelligent dispatching method and system for rail transit. Original data of a preset range is collected from a plurality of data sources. Passenger flow data of a rail transit station is acquired according to the original data. A passenger flow prediction model of the rail transit station is built according to the passenger flow data of the rail transit station. A passenger flow volume of the rail transit station in a preset period is acquired according to the passenger flow prediction model. Coordinated dispatching is performed on vehicles and passengers of the rail transit station according to the passenger flow volume of the preset time period, so as to make a smooth passenger flow at the rail transit station. The intelligent scheduling method and system for rail transit provided by the present invention can acquire the passenger flow data of the rail transit station according to the original data, collected from the plurality of data sources, in the preset range and preprocess the same, thereby achieving all-round real-time monitoring of the passenger flow at the rail transit station and improving the accuracy of the passenger flow data of the rail transit station. Different early warnings can also be issued to the rail transit station according to the transport capacity matching coefficients of the vehicles waiting for arrival, so that the station staff can take different measures to reasonably perform coordinated dispatching on the vehicles and passengers at the rail transit station, thereby orderly coping with an upcoming large passenger flow and ensuring a smooth passenger flow at the rail transit station.

It should be noted that in this context, relational terms such as first and second are used merely to distinguish one entity or operation from another entity or operation, instead of necessarily requiring or implying that these entities or operations have any of these actual relationships or orders. Furthermore, terms "include", "including" or any other variants are meant to cover non-exclusive inclusions, so that a process, method, object or device that includes a series of elements not only includes those elements, but also includes other elements which are not definitely listed, or further includes inherent elements of this process, method, object or device. Without more restrictions, elements defined by a sentence "includes a/an ..." do not exclude that the process, method, object or device that includes the elements still includes other identical elements.

In the description of the present invention, it should be understood that orientations or positional relationships indicated by the terms "center", "height", "thickness", "upper", "lower", "vertical", "horizontal", "top", "bottom", "inside", "outside", "axial", "radial", "circumferential", and the like are orientations or positional relationships as shown in the drawings, and are only for the purpose of facilitating and simplifying the description of the present invention instead of indicating or implying that devices or elements indicated must have particular orientations, and be constructed and operated in the particular orientations, so that these terms are not construed as limiting the present invention. In the description of the present invention, unless otherwise indicated, "plurality" means two or more.

In the description of the present invention, unless otherwise clearly specified and defined, the terms "mounted", "connected", "coupled" and "fixed" should be understood in a broad sense, for example, it can be a fixed connection, a detachable connection, or integrated. It can be a mechanical connection or an electrical connection. It can be a direct connection, or an indirect connection through an intermediate medium. It can also be an internal connection between two components or the interaction between two components. Those of ordinary skill in the art can understand the specific meanings of the above terms in the present invention according to specific situations.

In the present invention, unless otherwise clearly defined and defined, the first feature being "above" or "under" the second feature may include that the first and second features are in direct contact, or may include that the first and second features are not in direct contact but in contact through other features between them. Furthermore, the first feature being "above", "over" and "on" the second feature includes the first feature being directly above and obliquely above the second feature, or simply means that the level of the first feature is above that of the second feature. The first feature is "below", "under" and "underneath" the second feature includes the first feature being directly below and obliquely below the second feature, or simply means that the level of the first feature is below that of the second feature.

While the content of the present invention has been described in detail by way of the above preferred embodiments, it should be appreciated that the above description should not be construed as limiting the present invention. Various modifications and alternatives to the present invention will be apparent to those skilled in the art upon reading the foregoing. Therefore, the scope of protection of the present invention should be defined by the appended claims.

## Claims

1. An intelligent dispatching method for rail transit, comprising:
collecting original data of a preset range from a plurality of data sources;
acquiring passenger flow data of a rail transit station according to the original data;
building a passenger flow prediction model of the rail transit station according to the passenger flow data of the rail transit station;
acquiring a passenger flow volume of the rail transit station in a preset period according to the passenger flow prediction model; and
performing coordinated dispatching on vehicles and passengers of the rail transit station according to the passenger flow volume of the preset period, so as to make a smooth passenger flow at the rail transit station.

2. The intelligent dispatching method for rail transit according to claim 1, wherein
the preset range comprises: the rail transit station and a circular radiation area taking the rail transit station as a center and having a radius of 300 m to 2500 m;
the original data comprises: sold and checked ticket data, station video data, mobile phone signaling data, vehicle-mounted video data, and vehicle weight data.

3. The intelligent dispatching method for rail transit according to claim 2, wherein the step of acquiring passenger flow data of a rail transit station according to the original data comprises:
acquiring historical gate passenger flow data and real-time gate passenger flow data of the rail transit station according to the sold and checked ticket data;
acquiring historical entry and exit passenger flow data and real-time entry and exit passenger flow data of the rail transit station according to the station video data and the mobile phone signaling data; and
acquiring, according to the vehicle-mounted video data and the vehicle weight data, historical vehicle-mounted passenger flow data and real-time vehicle-mounted passenger flow data of a vehicle waiting for arrival.

4. The intelligent dispatching method for rail transit according to claim 3, wherein before the step of building a passenger flow prediction model of the rail transit station according to the passenger flow data of the rail transit station, the method further comprises:
preprocessing the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data, the preprocessing comprising deduplication and verification.

5. The intelligent dispatching method for rail transit according to claim 4, wherein the step of building a passenger flow prediction model of the rail transit station according to the passenger flow data of the rail transit station comprises:
according to the preprocessed historical gate passenger flow data, the preprocessed historical entry and exit passenger flow data, and the preprocessed historical vehicle-mounted passenger flow data, using a preset method to build the passenger flow prediction model of the rail transit station;
the preset method comprises one or any combination of a sliding window averaging method, T-SNE pattern analysis, DBSCAN pattern clustering and a random forest algorithm.

6. The intelligent dispatching method for rail transit according to claim 5, wherein the step of acquiring a passenger flow volume of the rail transit station in a preset period according to the passenger flow prediction model comprises:
acquiring an inbound and outbound passenger flow of the rail transit station in the preset period through the passenger flow prediction model according to the preprocessed real-time gate passenger flow data, the preprocessed real-time entry and exit passenger flow data, and the preprocessed real-time vehicle-mounted passenger flow data.

7. The intelligent dispatching method for rail transit according to claim 6, wherein the step of performing coordinated dispatching on vehicles and passengers of the rail transit station according to the passenger flow volume of the preset period comprises:
acquiring a passenger retention amount of the rail transit station in the preset period according to the inbound and outbound passenger flow in the preset period;
acquiring the number of vehicles waiting for arrival at the rail transit station in the preset period through a rail transit vehicle operation map;
calculating the transport capacity of the vehicles waiting for arrival in the preset period according to the number of the vehicles waiting for arrival and the real-time vehicle-mounted passenger flow data; and
calculating, according to the passenger retention amount and the transport capacity of the vehicles waiting for arrival in the preset period, a transport capacity matching coefficient of the vehicles waiting for arrival, so as to perform coordinated dispatching on the vehicles waiting for arrival and stranded passenger in the rail transit station.

8. The intelligent dispatching method for rail transit according to claim 7, wherein the step of performing coordinated dispatching on vehicles and passengers of the rail transit station according to the passenger flow volume of the preset period further comprises:
if the transport capacity matching coefficient is greater than 0.8, issuing a yellow warning to the rail transit station, and dredging the stranded passengers;
if the transport capacity matching coefficient is greater than 1, issuing an orange warning to the rail transit station, and restricting the flow in the rail transit station; and
if the transport capacity matching coefficient is greater than 1.2, issuing a red warning to the rail transit station, increasing the number of vehicles waiting for arrival, and adjusting a running interval of the vehicles waiting for arrival.

9. An intelligent dispatching system for rail transit, comprising:
a data collection module (110) configured for collecting original data of a preset range from a plurality of data sources;
a data analysis module (120) configured for acquiring passenger flow data of a rail transit station according to the original data;
a model building module (140) configured for building a passenger flow prediction model of the rail transit station according to the passenger flow data of the rail transit station, and acquiring, according to the passenger flow prediction model, a passenger flow volume of the rail transit station in a preset period; and
a commanding and dispatching module (150) configured for performing coordinated dispatching on vehicles and passengers of the rail transit station according to the passenger flow volume of the preset period.

10. The intelligent dispatching system for rail transit according to claim 9, further comprising:
a data preprocessing module (130) configured for preprocessing the original data;
a thermodynamic chart module (160) configured for generating a passenger flow thermodynamic chart according to the passenger flow data of the rail transit station.

11. The intelligent dispatching system for rail transit according to claim 10, wherein
the preset range comprises: the rail transit station and a circular radiation area taking the rail transit station as a center and having a radius of 300 m to 2500 m;
the original data comprises: sold and checked ticket data, station video data, mobile phone signaling data, vehicle-mounted video data, and vehicle weight data.

12. The intelligent dispatching system for rail transit according to claim 11, wherein the data analysis module (120) is specifically configured for acquiring historical gate passenger flow data and real-time gate passenger flow data of the rail transit station according to the sold and checked ticket data;
acquiring historical entry and exit passenger flow data and real-time entry and exit passenger flow data of the rail transit station according to the station video data and the mobile phone signaling data; and
acquiring, according to the vehicle-mounted video data and the vehicle weight data, historical vehicle-mounted passenger flow data and real-time vehicle-mounted passenger flow data of a vehicle waiting for arrival.

13. The intelligent dispatching system for rail transit according to claim 12, wherein the data preprocessing module (130) is specifically configured for preprocessing the historical gate passenger flow data, the real-time gate passenger flow data, the historical entry and exit passenger flow data, the real-time entry and exit passenger flow data, the historical vehicle-mounted passenger flow data, and the real-time vehicle-mounted passenger flow data, the preprocessing comprising deduplication and verification.

14. The intelligent dispatching system for rail transit according to claim 13, wherein the model building module (140) is specifically configured for using, according to the preprocessed historical gate passenger flow data, the preprocessed historical entry and exit passenger flow data, and the preprocessed historical vehicle-mounted passenger flow data, a preset method to build the passenger flow prediction model of the rail transit station; and
acquiring an inbound and outbound passenger flow of the rail transit station in the preset period through the passenger flow prediction model according to the preprocessed real-time gate passenger flow data, the preprocessed real-time entry and exit passenger flow data, and the preprocessed real-time vehicle-mounted passenger flow data.

15. The intelligent dispatching system for rail transit according to claim 14, wherein
the preset method comprises one or any combination of a sliding window averaging method, T-SNE pattern analysis, DBSCAN pattern clustering and a random forest algorithm.

16. The intelligent dispatching system for rail transit according to claim 14, wherein the commanding and dispatching module (150) is specifically configured for acquiring a passenger retention amount of the rail transit station in the preset period according to the inbound and outbound passenger flow in the preset period;
acquiring the number of vehicles waiting for arrival at the rail transit station in the preset period through a rail transit vehicle operation map;
calculating the transport capacity of the vehicles waiting for arrival in the preset period according to the number of the vehicles waiting for arrival and the real-time vehicle-mounted passenger flow data; and
calculating, according to the passenger retention amount and the transport capacity of the vehicles waiting for arrival in the preset period, a transport capacity matching coefficient of the vehicles waiting for arrival, so as to perform coordinated dispatching on the vehicles waiting for arrival and stranded passenger in the rail transit station.

17. The intelligent dispatching system for rail transit according to claim 16, wherein
if the transport capacity matching coefficient is greater than 0.8, a yellow warning is issued to the rail transit station, and the stranded passengers are dredged;
if the transport capacity matching coefficient is greater than 1, an orange warning is issued to the rail transit station, and the flow in the rail transit station is restricted; and
if the transport capacity matching coefficient is greater than 1.2, a red warning is issued to the rail transit station; the number of vehicles waiting for arrival is increased; and a running interval of the vehicles waiting for arrival is adjusted.
